# EUROPÄISCHE PATENTSCHRIFT

(11) **EP 4 257 865 B1**
(45) Veröffentlichungstag und Bekanntmachung des Hinweises auf die Patenterteilung: **25.12.2024**
(21) Anmeldenummer: 23152454.7
(22) Anmeldetag: 19.01.2023
(51) Int. Cl.: F16M 13/02, A47B 96/00, H04N 7/00

(54) **ANORDNUNG SOWIE EIN MODULBAUSYSTEM ZUM TRAGENDEN AUFNEHMEN EINES FUNKTIONSMODULS**
ASSEMBLY AND A MODULAR CONSTRUCTION SYSTEM FOR SUPPORTING A FUNCTIONAL MODULE
AGENCEMENT ET SYSTÈME DE CONSTRUCTION MODULAIRE POUR LA RÉCEPTION PORTEUSE D'UN MODULE FONCTIONNEL

(30) Priorität: 09.03.2022 DE 102022105507
(43) Veröffentlichungstag der Anmeldung: 11.10.2023
(73) Patentinhaber: Volucap GmbH, 14482 Potsdam (DE)
(72) Erfinder: Bliedung von der Heide, Sven, 14482 Potsdam (DE)
(74) Vertreter: Bittner, Thomas L.

(56) Entgegenhaltungen:
- EP-A2- 1 335 462
- DE-B3- 102016 009 470
- DE-U1- 8 704 779
- US-A1- 2020 292 920
- US-B1- 7 182 301

## Beschreibung

Die Erfindung betrifft eine Anordnung sowie ein Modulbausystem für eine Anordnung zum tragenden Aufnehmen eines Funktionsmoduls.

### Hintergrund

Bei der Bereitstellung von Strukturen zur Befestigung etwa von Mehrkamerasystemen werden regelmäßig entweder Teile und Profilformen aus Messestand-Fertigbausystemen verwendet oder für jeden konkreten Einsatz eine individuell angepasste Struktur aufgebaut, welche effektiv nur für diesen Einsatz verwendet werden kann.

Messestand-Fertigbausysteme haben jedoch den Nachteil, dass diese vornehmlich für Wände und unbewegliche Installationen konzipiert sind. Folglich ist ein flexibler oder beweglicher Einsatz auf diese Weise nur sehr beschränkt möglich. Des Weiteren bieten solche Fertigbausysteme wenig Möglichkeiten, spezifische Gerüstformen zu errichten.

Individuell angepasst Strukturen ermöglichen zwar grundsätzlich präziser angepasste Aufbauten, sind jedoch aufgrund der Konzipierung für spezielle Anwendungsszenarien noch unflexibler hinsichtlich nachträglicher Anpassungen als Fertigbausysteme.

Des Weiteren wird die Führung etwa von elektrischen Leitungen bei der Anbringung von Beleuchtungsvorrichtungen an Wandsystemen regelmäßig unzureichend berücksichtigt. Ein Nachrüsten ist bei bekannten Systemen aufgrund der fehlenden Flexibilität häufig schwierig zu bewerkstelligen. Die hierfür erforderlichen Arbeiten können während der arbeitsintensiven Vorbereitungsphase und sich wiederholend ändernden Ansprüche von Filmproduktionen eine zusätzliche Belastung darstellen.

Das Dokument DE 87 04 779 U1 offenbart ein Profilaufbaurohr welches aus den folgenden Halbrohr- und Schellenteilen zusammengeschraubt ist: aus einer beliebig ganzen Anzahl von Halbrohrmittelstücken, aus zwei Halbrohrendstücken und aus zwei Halbrohrkurzendstücken sowie aus Kleinschellen und Großschellen, wobei sowohl die Halbrohrendstücke als auch die Halbrohrmittelstücke jeweils an zwei Halbrohrteilen angeschraubt sind.

### Zusammenfassung

Aufgabe der Erfindung ist es, eine Anordnung sowie ein Modulbausystem anzugeben, mit denen Funktionsmodule auf flexible Art und Weise tragend aufgenommen werden können.

Zur Lösung sind eine Anordnung sowie ein Modulbausystem für eine Anordnung zum tragenden Aufnehmen eines Funktionsmoduls nach den unabhängigen Ansprüchen geschaffen. Ausgestaltungen sind Gegenstand abhängiger Unteransprüche.

Nach einem Aspekt ist eine Anordnung zum tragenden Aufnehmen eines Funktionsmoduls geschaffen. Die Anordnung weist auf: eine modulare Tragkonstruktion, die mit Trägerelementen gebildet ist, welche mit einem hohlen Querschnitt und einander gegenüberliegenden Profilelementen ausgeführt sind, wobei die Profilelemente jeweils einen mittleren Halbrohrabschnitt sowie hieran beidseitig einstückig angeformte Teilflügelabschnitte mit Profilelement-Öffnungen aufweisen und die Teilflügelabschnitte der Profilelemente flächig aufeinanderliegend angeordnet sind, derart, dass die Profilelement-Öffnungen paarweise einander zugeordnet sind, die Halbrohrabschnitte jedes der Trägerelemente einen Rohrabschnitt und die Teilflügelabschnitte jedes der Trägerelemente jeweils einen Flügelabschnitt bilden, und ein Funktionsmodul, welches an der Tragkonstruktion montiert ist.

Nach einem weiteren Aspekt ist ein Modulbausystem für eine Anordnung zum tragenden Aufnehmen eines Funktionsmoduls geschaffen, aufweisend Trägerelemente für eine modulare Tragkonstruktion, wobei die Trägerelemente mit einem hohlen Querschnitt und einander gegenüberliegenden Profilelementen ausgeführt sind, wobei die Profilelemente jeweils einen mittleren Halbrohrabschnitt sowie hieran beidseitig einstückig angeformte Teilflügelabschnitte mit Profilelement-Öffnungen aufweisen und die Teilflügelabschnitte der Profilelemente flächig aufeinanderliegend angeordnet sind, derart, dass die Profilelement-Öffnungen paarweise einander zugeordnet sind, die Halbrohrabschnitte jedes der Trägerelemente einen Rohrabschnitt und die Teilflügelabschnitte jedes der Trägerelemente jeweils einen Flügelabschnitt bilden.

Auf diese Weise kann bei geringem Gewicht und zugleich hoher Stabilität, gestalterischer Flexibilität sowie vereinfachter und beschleunigter Montage und Demontage der Anordnung eine effiziente tragende Aufnahme oder Befestigung von (Funktions-)Modulen, beispielsweise für eine Bild- und / oder Tonaufnahmeproduktion, ermöglicht werden. Insbesondere bei Mehrkamerasystemen, volumetrischen Aufnahmen und Lichtfeldaufnahmen können solche Module auf flexible Weise, etwa sphärisch angeordnet werden. Positionierungen der einzelnen Module können in kleinen Einheiten und variablen Abständen ermöglicht werden, was insbesondere mit fertigen Messebausysteme aufgrund regelmäßig zu großer sowie einheitlicher Abstände erschwert sein kann. Des Weiteren können gerade Flächen und sphärische Befestigungspunkte flexibel im Raum definiert werden. Somit können individuelle, aber auch wiederverwendbare Strukturen realisiert werden.

Hierzu kann insbesondere die Profilform der Trägerelemente und der entsprechend ausgelegten Gelenke und Halterungselemente eine stabile und zugleich einfach anpassbare Montage der Anordnung ermöglichen. Weiterer konstruktiver Aufwand, etwa bei schwereren Geräten, beispielsweise Kinokameras oder medialen Übertragungsgeräten, kann vermieden werden.

Jeweils einander zugeordnete Profilelementöffnungen können zusammen eine Öffnung eines der Flügelabschnitte bilden. Die Öffnung (Loch, Durchgangsöffnung) und / oder die Profilelementöffnungen können jeweils kreisförmig sein. Die Öffnung und / oder die Profilelementöffnungen können jeweils eine Bohrung sein. Jeder der Flügelabschnitte kann beispielsweise zwischen 2 und 100 Öffnungen, bevorzugt zwischen 20 und 60 Öffnungen, besonders bevorzugt zwischen 30 und 50 Öffnungen aufweisen.

Die Flügelabschnitte können sich jeweils in Längsrichtung des Rohrabschnitts erstrecken und im Wesentlichen eben gebildet sein.

Erste Öffnungen eines ersten der zwei Flügelabschnitte können mit zweiten Öffnungen des zweiten der zwei Flügelabschnitte entlang einer Querrichtung paarweise miteinander fluchtend angeordnet sein.

Die Öffnungen können der beiden Flügelabschnitte können jeweils in einer Reihe entlang der Längsrichtung angeordnet sein. Insbesondere können die ersten Öffnungen in einer ersten Reihe entlang der Längsrichtung angeordnet sein und / oder die zweiten Öffnungen in einer zweiten Reihe entlang der Längsrichtung angeordnet sein. Die Öffnungen, insbesondere die ersten Öffnungen und die zweiten Öffnungen, können jeweils äquidistant zueinander angeordnet sein, beispielsweise in einem Öffnungsabstand zwischen 3 cm und 20 cm. Paarweise miteinander fluchtende erste und zweite Öffnungen können jeweils einen Abstand zwischen 5 cm und 25 cm aufweisen.

Die Öffnungen können denselben Öffnungsdurchmesser aufweisen, beispielsweise zwischen 5 mm und 50 mm. Alternativ können verschiedene Öffnungsdurchmesser vorgesehen sein, zum Beispiel für jeden der Flügelabschnitte alternierend Öffnungen eines größeren Durchmessers zwischen 20 mm und 50 mm und Öffnungen eines kleineren Durchmessers zwischen 5 mm und 25 mm.

Das Trägerelement, insbesondere der Rohrabschnitt und / oder mindestens einer der beiden Flügelabschnitte können des Weiteren mindestens eines von Gewinde, Senkung, Nut, Sicke, Körnung und Entlastungsschnitt aufweisen. Insbesondere kann jede der Öffnungen ein Öffnungsgewinde aufweisen. In jedem der Flügelabschnitte kann mindestens eine Flügelsicke gebildet sein, beispielsweise in Längsrichtung oder in Querrichtung des Trägerelements.

Der Rohrabschnitt kann einen im Wesentlichen runden oder ovalen Querschnitt (Profil) aufweisen, beispielsweise ein O-Profil. Bevorzugt können sich die Flügelabschnitte radial vom Rohrabschnitt erstrecken.

Alternativ kann der Rohrabschnitt auch einen polygonalen Querschnitt aufweisen, insbesondere etwa einen quadratischen Querschnitt, einen hexagonalen Abschnitt oder einen oktogonalen Abschnitt. Hierbei können sich die Flügelabschnitte ebenfalls lateral bezüglich eines Rohrabschnitt-Querschnittzentrums vom Rohrabschnitt nach außen erstrecken.

Jeder der Flügelabschnitte kann sich (im Wesentlichen) entlang einer Ebene (Flügelabschnittebene) erstrecken. Insbesondere kann jeder der Flügelabschnitte einen flachen Bereich aufweisen. Jeder der Flügelabschnitte kann im Wesentlichen plattenförmig gebildet sein.

Das Trägerelement kann spiegelsymmetrisch gebildet sein, insbesondere bezüglich der Flügelabschnittebene und / oder bezüglich einer zur Flügelabschnittebene orthogonalen Ebene. Speziell kann ein Profil des Trägerelements spiegelsymmetrisch gebildet sein, insbesondere bezüglich einer Gerade, entlang welcher sich ein Profil der Flügelabschnitte erstreckt, und / oder bezüglich hierzu orthogonalen Gerade.

Der flache Bereich kann im Wesentlichen senkrecht zu einer Umfangsrichtung des Rohrabschnitts angeordnet sein.

Der Rohrabschnitt kann zu mindestens einem der Flügelabschnitte hin gekrümmt sein. Insbesondere kann der Querschnitt des Rohrabschnitts mindestens einen, bevorzugt zwei Wendepunkte aufweisen, welche einen ersten Bereich des Rohrabschnitts mit einer Kreiskrümmung von einem zweiten Bereich zu einer Krümmung des flachen Abschnitts trennen.

Jeder der Halbrohrabschnitte kann im Wesentlichen einen Halbkreis-Querschnitt oder Halboval-Querschnitt aufweisen. Jeder der Halbrohrabschnitte kann im Wesentlichen ein U-Profil aufweisen.

Die Teilflügelabschnitte sind jeweils zueinander fluchtend angeordnet und miteinander nicht lösbar verbunden. Jeder der Teilflügelabschnitte kann sich im Wesentlichen entlang einer Ebene erstrecken. Insbesondere kann jeder der Teilflügelabschnitte einen flachen Bereich aufweisen. Jeder der Teilflügelabschnitte kann im Wesentlichen plattenförmig gebildet sein. Jeder der Halbrohrabschnitte kann jeweils zu mindestens einem der Teilflügelabschnitte hin gekrümmt sein. Insbesondere kann der jeweilige Querschnitt der Halbrohrabschnitte mindestens einen, bevorzugt zwei Wendepunkte aufweisen, welche einen ersten Bereich des Halbrohrabschnitts mit einer (Halb-)Kreiskrümmung von einem zweiten Bereich zu einer Krümmung des flachen Teilflügelabschnitts trennen.

Jeweils mindestens eine Öffnung der Flügelabschnitte kann sich durch beide Teilflügelabschnitte erstrecken.

Die Halbrohrabschnitte sind miteinander verklebt und nicht lösbar verbunden.

Die jeweils zueinander fluchtend angeordneten Teilflügelabschnitte sind miteinander verklebt. In einem Beispiel, welches nicht Teil der beanspruchten Erfindung ist, können die jeweils zueinander fluchtend angeordneten Teilflügelabschnitte lösbar miteinander verbunden sein, beispielsweise mittels eines Teilflügel-Befestigungsmittels durch eine der Öffnungen.

Die Teilflügelabschnitte können entlang der flachen Bereiche miteinander verbunden sein. Insbesondere können erste Teilflügelabschnitte eines ersten der Profilelemente formschlüssig mit zweiten Teilflügelabschnitten eines zweiten der Profilelemente angeordnet sein.

Die Flügelabschnitte und / oder die Teilflügelabschnitte können in Längsrichtung durchgehend gebildet sein. Die Profilelemente, insbesondere die Teilflügelabschnitte und / oder die Halbrohrabschnitte können frei von inneren Kanten / Knicken gebildet sein.

Die Halbrohrabschnitte jedes der Profilelemente können jeweils in einer gemeinsamen Ebene angeordnet sein.

Der Rohrabschnitt kann eine konstante Rohrabschnittdicke aufweisen und / oder die Flügelabschnitte können jeweils eine konstante Flügelabschnittdicke aufweisen. Die Profilelemente können jeweils eine konstante Profilelementdicke aufweisen, welche bevorzugt gleich der Rohrabschnittdicke und / oder einer Teilflügelabschnittdicke ist. Die Rohrabschnittdicke kann die Hälfte der Flügelabschnittdicke betragen.

Es kann auch vorgesehen sein, dass das Trägerelement eine konstante Dicke aufweist. Insbesondere kann die Rohrabschnittdicke gleich der Flügelabschnittdicke und / oder gleich dem Doppelten der Teilflügelabschnittdicke sein. Die Profilelemente können in lateraler Richtung hin verjüngt sein.

Die Rohrabschnittdicke und / oder die Teilflügelabschnittdicke kann beispielsweise zwischen 0,5 mm und 25 mm betragen. Die Flügelabschnittdicke kann beispielsweise zwischen 1 mm und 50 mm betragen.

Die Flügelabschnitte können jeweils eine Flügelabschnittbreite zwischen 25 % und 100 % einer Rohrabschnittbreite aufweisen. Bevorzugt können die Flügelabschnitte in lateraler Richtung jeweils eine Länge zwischen 40 % und 60 % der Rohrabschnittbreite aufweisen.

Die Flügelabschnittdicke kann weniger als 20 %, bevorzugt weniger als 10 % der Flügelabschnittbreite betragen. Die Rohrabschnittdicke kann weniger als 10 %, bevorzugt weniger als 5 % der Rohrabschnittbreite betragen.

Die Rohrabschnittbreite kann beispielsweise zwischen 1 cm und 25 cm betragen. Die Rohrabschnittbreite kann im Falle eine runden Querschnitts des Rohrabschnitts gleich einem Rohrabschnittdurchmesser sein. Die Flügelabschnittbreite kann zum Beispiel zwischen 1 cm und 15 cm betragen.

Das Funktionsmodul kann ein Funktionsmodul aus der folgenden Gruppe sein: Filmproduktionsmodul, Bildaufnahmemodul, Tonaufnahmemodul, Beleuchtungsmodul und Messmodule für Tiefeninformation, Bewegungsdaten und Materialeigenschaften. Hierzu gehören zum Beispiel (RGB, IR, Time of flight) Kameras, (Richt)Mikrofone, Beleuchtungsmittel wie Scheinwerfer und LEDs sowie Radar- und Laserscantechnologie. Die Beleuchtungsvorrichtungen können beispielsweise insgesamt eine Beleuchtungsstärke von 1000 Lux bis 50000 Lux, bevorzugt von 5000 Lux bis 15000 Lux aufweisen.

Das Funktionsmodul kann beispielsweise eine Masse von etwa 0,1 kg bis etwa 20 kg, vorzugsweise bis etwa 10kg, weiter bevorzugt bis etwa 5 kg aufweisen.

Der Rohrabschnitt kann eine Rohrabschnittlänge von 20 cm bis 200 cm aufweisen. Die Flügelabschnitte können außerdem eine Flügelabschnittlänge von 20 cm bis 200 cm aufweisen.

Die Rohrabschnittlänge kann gleich der Flügelabschnittlänge sein. Alternativ kann die Rohrabschnittlänge länger oder kürzer als die Flügelabschnittlänge sein, insbesondere um mehr als 5 % der Rohrabschnittlänge. Der Rohrabschnitt kann beispielsweise über die Flügelabschnitte in Längsrichtung hinausragen.

Die Anordnung und / oder die Trägerelemente können des Weiteren Karbonfasern aufweisen. Die Anordnung und / oder die Trägerelemente können insbesondere karbonfaserverstärkten Kunststoff (CFK) aufweisen. Das Trägerelement und / oder die Profilelemente können speziell im Wesentlichen aus Karbonfasern oder CFK gebildet sein oder bestehen. Auf diese Weise kann ein erleichterter Transport und Aufbau ermöglicht sein, insbesondere etwa gegenüber der Verwendung von Eisen oder Aluminium, welche ein hohes Eigengewicht bewirken können.

Weitere Befestigungsmittel, insbesondere die Teilflügelbefestigungsmittel können ein Metall (beispielsweise Stahl) aufweisen oder aus dem Metall gebildet sein. Durch den Einsatz von Metallen an nur nötigen Stellen (etwa bei Verschraubungen) kann die Stabilität von Metall mit der Leichtigkeit von Karbonfasern kombiniert werden.

Die Tragkonstruktion kann ein Gelenk mit miteinander verbundenen und zueinander verdrehbaren Gelenkelementen aufweisen, welche jeweils mit einer Gelenkaufnahme gebildet sind, die eingerichtet ist, hierin ein erstes der Trägerelemente haltend aufzunehmen.

Die Gelenkaufnahme jedes Gelenkelements kann eingerichtet sein, ein Trägerelement in Längsrichtung formschlüssig aufzunehmen. Die Gelenkaufnahme kann eine erste und eine zweite Nut aufweisen, welche bevorzugt eingerichtet sind, jeweils einen der Flügelabschnitte in Längsrichtung formschlüssig aufzunehmen. Die Gelenkaufnahme kann ein Zylinderelement aufweisen, welches bevorzugt eingerichtet ist, den Rohrabschnitt in Längsrichtung formschlüssig aufzunehmen. Die erste Nut und die zweite Nut können bezüglich der Gelenkaufnahme gegenüberliegend angeordnet sein.

Jedes Gelenkelement kann zwei Teilgelenkelemente aufweisen, mittels deren Zusammenfügen die Gelenkaufnahme sowie bevorzugt die erste Nut und die zweite Nut gebildet sind. Die Teilgelenkelemente können miteinander nicht lösbar verbunden (zum Beispiel verklebt oder vernietet) sein. Die Gelenkelemente können auf einer Achse angeordnet sein und mittels der Achse zueinander verdrehbar sein.

Das Gelenk kann ein Arretierungsmittel aufweisen. Das Arretierungsmittel kann eingerichtet sein, eine Längsbewegung des ersten der Trägerelemente (im Gelenkelement) lösbar zu arretieren.

Jedes Gelenkelement kann mindestens eine Arretierungsöffnung aufweisen, welche bevorzugt die erste Nut oder die zweite Nut schneidet. Die mindestens eine Arretierungsöffnung kann derart angeordnet sein, dass sie bei Aufnahme des ersten der Trägerelemente mit einer der Öffnungen des Flügelabschnitts (bei bestimmter Verschiebung des Trägerelements) fluchtet.

Das Arretierungsmittel kann mindestens ein Arretierungsbefestigungsmittel aufweisen, welches eingerichtet ist, mittels der Arretierungsöffnung und der Öffnung des Flügelabschnitts das Trägerelement lösbar zu arretieren. Das Trägerelement kann also mit einem der Gelenkelemente mittels des Arretierungsbefestigungsmittels durch die Öffnung und die Arretierungsöffnung lösbar verbunden sein.

Das Arretierungsbefestigungsmittel kann beispielsweise eine Schraubverbindung und / oder eine Rastverbindung aufweisen.

Ergänzend oder alternativ kann das Trägerelement auch mittels Pressung der Teilgelenkelemente mittels des Arretierungsmittels arretiert sein.

Das Gelenk kann ferner ein Dreharretierungsmittel aufweisen, welches eingerichtet ist, eine Drehung der Gelenkelemente zueinander lösbar zu arretieren und / oder einen Drehwinkel der Gelenkelemente zueinander lösbar zu fixieren. Beispielsweise können die Gelenkelemente jeweils mindestens eine Dreharretierungsöffnung aufweisen, die jeweils eingerichtet sind, bei Drehung der Gelenkelemente zu einem bestimmten Drehwinkel miteinander zu fluchten. Mindestens eines der Gelenkelemente kann insbesondere mehrere Dreharretierungsöffnungen aufweisen, die jeweils eingerichtet sind, bei Drehung der Gelenkelemente zu bestimmten Drehwinkeln mit der mindestens einen Dreharretierungsöffnung des anderen der Gelenkelemente zu fluchten. Das Dreharretierungsmittel kann mindestens ein Dreharretierungsbefestigungsmittel aufweisen, welches eingerichtet ist, mittels der Dreharretierungsöffnungen der Gelenkelemente die Drehbewegung der Gelenkelemente zueinander lösbar zu arretieren.

Die Gelenkelemente können Karbonfasern oder CFK aufweisen. Insbesondere können die Gelenkelemente im Wesentlichen aus Karbonfasern oder CFK gebildet sein. Die Gelenkaufnahme kann beispielsweise eine Länge zwischen 5 cm und 30 cm aufweisen.

Die Tragkonstruktion kann ein Halterungselement mit einer Halterungsaufnahme, in der das erste oder ein zweites der Tragrohrelemente angeordnet ist, und ein Anschlusselement aufweisen, mit der ein Stützelement und / oder das Funktionsmodul an der Tragkonstruktion aufgenommen, insbesondere montiert ist.

Ergänzend oder alternativ zur Aufnahme von Funktionsmodulen an Anschlusselementen an Halterungselementen können (weitere) Funktionsmodule auch an weiteren Stellen der Anordnung aufgenommen sein, etwa am Kopfelement und / oder an den Flügelabschnitten.

Die Halterungsaufnahme des Halterungselements kann eine dritte Nut und eine vierte Nut aufweisen, welche bevorzugt eingerichtet sind, jeweils einen der Flügelabschnitte in Längsrichtung formschlüssig aufzunehmen. Die Halterungsaufnahme kann ein zweites Zylinderelement aufweisen, welches bevorzugt eingerichtet ist, den Rohrabschnitt in Längsrichtung formschlüssig aufzunehmen. Die dritte Nut und die vierte Nut können bezüglich der Halterungsaufnahme gegenüberliegend angeordnet sein.

Das Halterungselement kann zwei Teilhalterungselemente aufweisen, mittels deren Zusammenfügen die Halterungsaufnahme sowie bevorzugt die dritte Nut und die vierte Nut gebildet sind. Die Teilhalterungselemente können miteinander nicht lösbar verbunden sein (zum Beispiel verklebt oder vernietet).

Das Halterungselement kann ein zweites Arretierungsmittel aufweisen. Das zweite Arretierungsmittel kann eingerichtet sein, eine Längsbewegung des im Halterungselement aufgenommenen Trägerelements (im Halterungselement) lösbar zu arretieren. Das Halterungselement kann mindestens eine Halterungsarretierungsöffnung aufweisen, welche bevorzugt die dritte Nut oder die vierte Nut schneidet. Die mindestens eine Halterungsarretierungsöffnung kann derart angeordnet sein, dass sie bei Aufnahme des Trägerelements mit einer (weiteren) der Öffnungen des Flügelabschnitts (bei bestimmter Verschiebung des Trägerelements) fluchtet. Das zweite Arretierungsmittel kann mindestens ein zweites Arretierungsbefestigungsmittel aufweisen, welches eingerichtet ist, mittels der Halterungsarretierungsöffnung und der Öffnung des Flügelabschnitts das Trägerelement lösbar zu arretieren. Das zweite Arretierungsbefestigungsmittel kann eine Schraubverbindung und / oder eine Rastverbindung aufweisen. Ergänzend oder alternativ kann das Trägerelement auch mittels Pressung der Teilhalterungselemente durch das zweite Arretierungsmittel arretiert sein.

Das Anschlusselement des Halterungselements kann beispielsweise rohrförmig gebildet sein. Das Anschlusselement kann im Wesentlichen senkrecht zur Längsrichtung der Halterungsaufnahme angeordnet sein. Das Anschlusselement kann auch beispielsweise eine Montagefassung aufweisen.

Das Halterungselement kann Karbonfasern oder CFK aufweisen. Insbesondere kann das Halterungselement im Wesentlichen aus Karbonfasern oder CFK gebildet sein. Die Halterungsaufnahme kann beispielsweise eine Länge zwischen 5 cm und 30 cm aufweisen.

Jedes der Trägerelemente kann verschiebungsfest und / oder drehfest in der Anordnung angeordnet sein, insbesondere mittels jeweiliger Arretierungsmittel respektive Dreharretierungsmittel der Mehrzahl von Gelenken.

Die Anordnung kann ein Kopfelement aufweisen, welches eingerichtet ist, mit mehreren der Mehrzahl von Trägerelementen lösbar verbindbar zu sein. Vorzugsweise kann eine erste Trägerelementgruppe seriell mittels einer ersten Gelenkgruppe miteinander lösbar zu einem ersten Arm verbunden sein und / oder eine zweite Trägerelementgruppe seriell mittels einer zweiten Gelenkgruppe miteinander lösbar zu einem zweiten Arm verbunden sein und / oder eine dritte Trägerelementgruppe seriell mittels einer dritten Gelenkgruppe der Mehrzahl von Gelenken miteinander lösbar zu einem dritten Arm verbunden sein. Der erste Arm und / oder der zweite Arm und / oder der dritte Arm können jeweils an einem ersten Arm-Ende lösbar am Kopfelement befestigt sein. Ergänzend können weitere entsprechend gebildete Arme vorgesehen sein. Der erste Arm und / oder der zweite Arm und / oder der dritte Arm können außerdem jeweils an einem zweiten Arm-Ende auf einem Untergrund angeordnet sind, insbesondere mittels jeweiliger Fußelemente (Bodenmodule). Die Fußelemente können beispielsweise jeweils scheibenförmig gebildet sein.

Das Kopfelement kann derart eingerichtet sein, dass mit dem Kopfelement verbundene Trägerelemente sich strahlenförmig von einem Kopfelementzentrum erstrecken. Das Kopfelement kann hierzu mehrere Kopfverbindungselemente aufweisen, welche sich strahlenförmig vom Kopfelementzentrum erstrecken. Die Kopfverbindungselemente können jeweils gleichwinklig zueinander beabstandet sein. Alternativ können die Kopfverbindungselemente jeweils verschiedene Abstände zueinander aufweisen.

Die Kopfverbindungselemente können in einer Ebene angeordnet sein. Das Kopfelement kann rotationssymmetrisch gebildet sein. Alternativ kann das Kopfelement auch beispielsweise eine Leistenform aufweisen.

Das Kopfelement kann mehrere Kopfbefestigungsmittel aufweisen, die jeweils zur lösbaren Verbindung mit einem der Trägerelemente eingerichtet sind. Insbesondere kann jedes der Kopfbefestigungsmittel ein Schienenelement aufweisen, das mit einem der Kopfverbindungselemente und einem der Trägerelement lösbar befestigt ist und vorzugsweise mit diesen fluchtet.

Das Kopfelement kann beispielsweise 3 bis 20 Kopfverbindungselemente aufweisen. Die Anordnung kann entsprechend 3 bis 20 Arme aufweisen. Jeder Arm kann zum Beispiel 3 bis 10 Trägerelemente aufweisen. Es kann vorgesehen sein, dass jeder Arm gleich viele Trägerelemente aufweist.

Es kann vorgesehen sein, dass jeder der Arme mittels der Gelenke des Arms mit einer im Wesentlichen Viertelkreisform gebildet ist. Die Anordnung kann entsprechend im Wesentlichen eine Haubenform oder eine Tonnengewölbeform (etwa für einen *Walkway*) aufweisen.

Es kann auch vorgesehen sein, dass jeder der Arme mittels der Gelenke des Arms zu einer Gerade gebildet ist. Die Anordnung kann entsprechend im Wesentlichen eine Kegelform, eine Pyramidenform oder eine Prismenform aufweisen.

Es kann des Weiteren vorgesehen sein, dass jeder der Arme mittels der Gelenke des Arms zu einem Winkel, bevorzugt einem rechten Winkel (L-Form) gebildet ist. Die Anordnung kann entsprechend im Wesentlichen eine Zylinderform oder eine Quaderform aufweisen.

Die Anordnung kann des Weiteren eine Mehrzahl von Halterungselementen und ein erstes Stützelement aufweisen, wobei vorzugsweise ein erstes Halterungselement der Mehrzahl von Halterungselementen auf einem der Trägerelemente des ersten Arms und ein zweites Halterungselement auf einem der Trägerelementen des zweiten Arms befestigt sein kann und, besonders vorzugsweise, das erste Halterungselement über das erste Stützelement mit dem zweiten Halterungselement lösbar verbunden sein kann. Insbesondere können der erste Arm und der zweite Arm benachbart sein.

Im Sinne der Offenbarung sind zwei Elemente benachbart, wenn kein gleichartiges Element zwischen den zwei Elementen angeordnet ist.

Des Weiteren kann ein drittes Halterungselement auf einem der Trägerelemente des ersten Arms, welches zum ersten Halterungselement des ersten Arms benachbart ist, mit einem vierten Halterungselement auf einem der Trägerelemente des zweiten Arms, welches zum zweiten Halterungselement des zweiten Arms benachbart ist, über ein zweites Stützelement lösbar verbunden sein. Insbesondere können das erste und das dritte Halterungselement auf demselben Trägerelement und / oder das zweite und das vierte Halterungselement auf demselben Trägerelement angeordnet sein. Das erste Stützelement und das zweite Stützelement können sich überkreuzend angeordnet sein. Alternativ können das erste Stützelement und das zweite Stützelement im Wesentlichen parallel zueinander angeordnet sein.

Allgemein können benachbarte Arme über eine Mehrzahl von Stützelementen miteinander verbunden sein, beispielsweise in Form eines Fachwerks. Mindestens eines oder jedes der Stützelemente kann rohrförmig gebildet sein. Mindestens eines oder jedes der Stützelemente kann rohrförmig kann ein Rohr oder eine Mehrzahl von Rohren aufweisen, beispielsweise zwei oder drei Rohre. Die Stützelemente können Karbonfasern und / oder CFK aufweisen. Die Stützelemente können im Wesentlichen aus Karbonfasern oder CFK bestehen.

Die Anordnung kann des Weiteren Rahmen und / oder Rahmenelemente (etwa als eines von Wandrahmen, Bodenrahmen, Wandrahmenelement und Bodenrahmenelement) aufweisen, insbesondere zur Verbindung von Trägerelementen.

In der Anordnung und / oder in der Tragkonstruktion kann ein Innenraum gebildet sein, welcher vorzugsweise dimensioniert ist, eine Person und / oder eine Mehrzahl von Personen (beispielsweise eine bis zehn Personen) und / oder ein Körperteil (beispielsweise einen Personenkopf) teilweise oder vollständig zu umgeben. Die Anordnung kann eingerichtet sein, eine bis 80 Kameras befestigt aufzunehmen, bevorzugt 12 bis 40 Kameras.

Die Anordnung kann eine lichtdurchlässige Schicht aufweisen, welche vorzugsweise eingerichtet ist, den Innenraum teilweise oder vollständig oberhalb des Untergrunds zu umgeben. Die Schicht kann vorzugsweise eine im Wesentlichen weiße Farbe aufweisen.

Die Anordnung kann beweglich oder unbeweglich (beispielsweise befestigt) auf dem Untergrund angeordnet sein.

Die vorstehend in Verbindung mit der Anordnung beschriebenen Ausgestaltungen können für das Modulbausystem (Bausatz) entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1a: eine schematische Darstellung eines Profilelements in einer Ansicht;
- Fig. 1b: eine schematische Darstellung des Profilelements in einer Draufsicht;
- Fig. 2a: eine schematische Darstellung eines Trägerelements in einer ersten Ansicht;
- Fig. 2b: eine schematische Darstellung des Trägerelements in einer Profilansicht;
- Fig. 3a: eine schematische Darstellung eines Gelenks in einer ersten Ansicht;
- Fig. 3b: eine schematische Darstellung des Gelenks in einer zweiten Ansicht;
- Fig. 4a: eine schematische Darstellung des Gelenks in einer dritten Ansicht;
- Fig. 4b: eine schematische Darstellung des Gelenks in einer vierten Ansicht;
- Fig. 5a: eine schematische Darstellung eines Halterungselements in einer ersten Ansicht;
- Fig. 5b: eine schematische Darstellung des Halterungselements in einer zweiten Ansicht;
- Fig. 6: eine schematische Darstellung einer ersten Teilanordnung mit einem Gelenk und zwei Trägerelementen;
- Fig. 7a: eine schematische Darstellung einer zweiten Teilanordnung mit einem Gelenk, zwei Trägerelementen und zwei Halterungselementen;
- Fig. 7b: eine schematische Darstellung einer dritten Teilanordnung mit einem Gelenk, zwei Trägerelementen und einem Halterungselement;
- Fig. 8: eine schematische Darstellung einer Tragkonstruktion in einer ersten Ansicht;
- Fig. 9a: eine schematische Darstellung der Tragkonstruktion in einer zweiten Ansicht;
- Fig. 9b: eine schematische Darstellung der Tragkonstruktion in einer dritten Ansicht;
- Fig. 10a: zeigt eine schematische Darstellung einer weiteren Ausgestaltung der Tragkonstruktion in einer ersten Ansicht;
- Fig. 10b: eine Detailansicht der Tragkonstruktion;
- Fig. 11a: eine schematische Darstellung der Tragkonstruktion in einer zweiten Ansicht und
- Fig. 11b: eine schematische Darstellung der Tragkonstruktion in einer dritten Ansicht;
- Fig. 12a: eine schematische perspektivische Darstellung einer Anordnung mit Halterungselementen;
- Fig. 12b: eine schematische Darstellung für ein Detail A der Anordnung aus Fig. 12a;
- Fig. 13a: eine weitere schematische perspektivische Darstellung der Anordnung mit Halterungselementen aus Fig. 12a;
- Fig. 13b: eine schematische Darstellung für ein Detail B der Anordnung aus Fig. 13a;
- Fig. 14a: eine weitere schematische perspektivische Darstellung der Anordnung mit Halterungselementen aus Fig. 12a und
- Fig. 14b: eine schematische Darstellung für ein Detail C der Anordnung aus Fig. 14a.

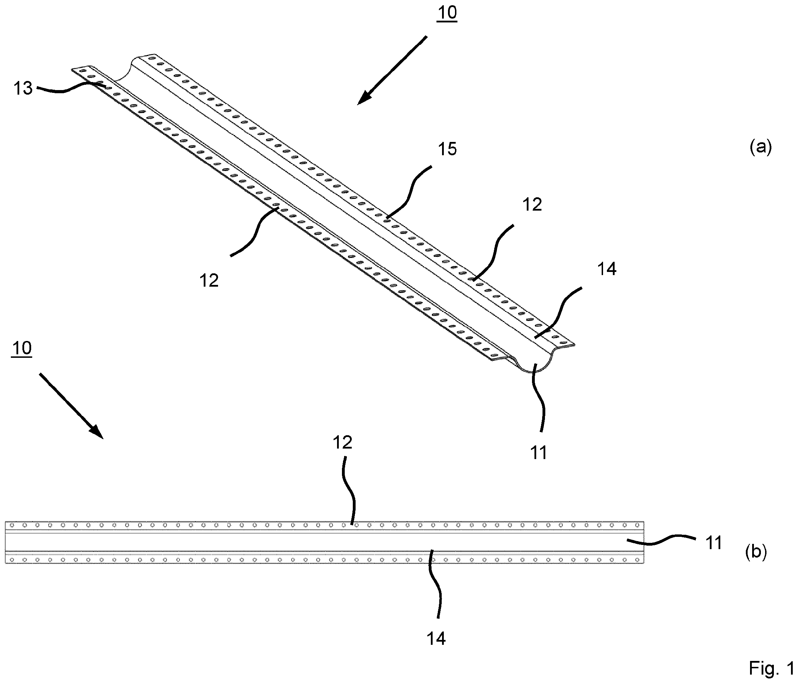

In Fig. 1a ist eine schematische Darstellung eines Profilelements 10 in einer Ansicht und in Fig. 1b eine schematische Darstellung des Profilelements 10 in einer Draufsicht gezeigt. Das Profilelement 10 weist einen Halbrohrabschnitt 11 mit einem U-Profil (in Querrichtung) auf sowie einen ersten und zweiten Teilflügelabschnitt 12. In jedem der Teilflügelabschnitte 12 können Profilelement-Öffnungen 13 vorgesehen sein. Bereiche wechselnder Krümmung im Profil des Halbrohrabschnitts 11 sind mittels der Wendepunktlinie 14 veranschaulicht. Die Teilflügelabschnitte 12 weisen einen flachen ebenen Bereich 15 auf.

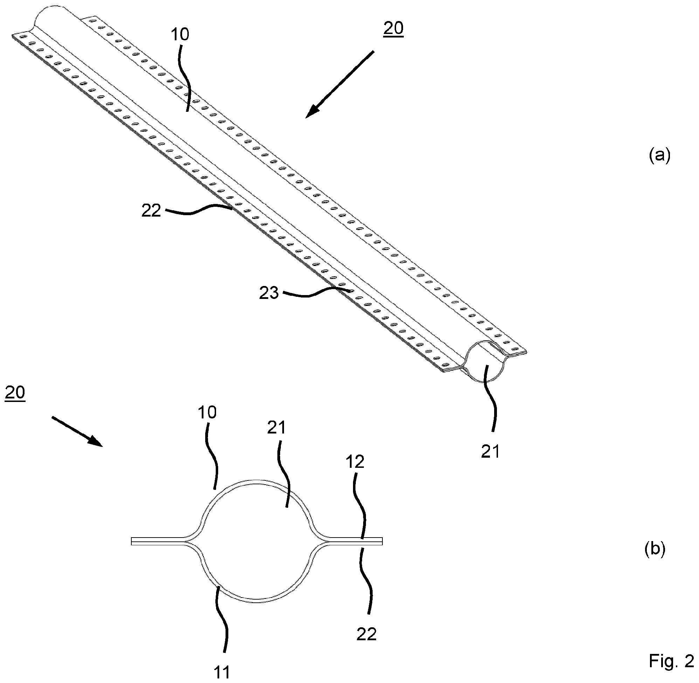

Fig. 2a zeigt eine schematische Darstellung eines Trägerelements 20 mit einem Rohrabschnitt 21 und zwei Flügelabschnitten 22 in einer ersten Ansicht und Fig. 2b zeigt eine schematische Darstellung des Trägerelements 20 in einer Profilansicht.

Das Trägerelement 20 weist zwei Profilelemente 10 auf, die in Längsrichtung miteinander verbunden sind, beispielsweise mittels Klebung jeweils miteinander fluchtend angeordneter Teilflügelabschnitte 12, insbesondere an den formschlüssig aneinander ordenbaren ebenen Bereichen 15. Die Teilflügelabschnitte 12 bilden auf diese Weise die Flügelabschnitte 22. Die Halbrohrabschnitte 11 bilden dabei zusammen den Rohrabschnitt 21.

Öffnungen 23 an den Flügelabschnitten sind aus den Profilelement-Öffnungen 13 gebildet. Die Profilelement-Öffnungen 13 eines der Profilelemente 10 sind somit paarweise fluchtend mit weiteren Profilelement-Öffnungen 13 des anderen der Profilelemente 10 angeordnet. Es kann vorgesehen sein, dass die Öffnungen 23 nach dem Verbinden der Profilelemente 10 oder alternativ vor dem Verbinden der Profilelemente 10 gefertigt werden.

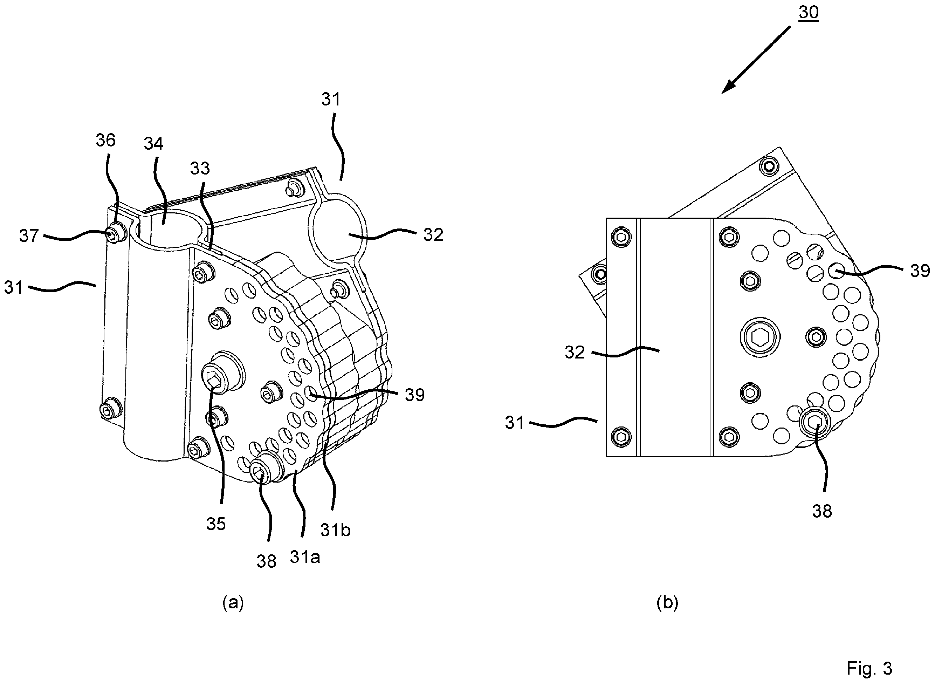

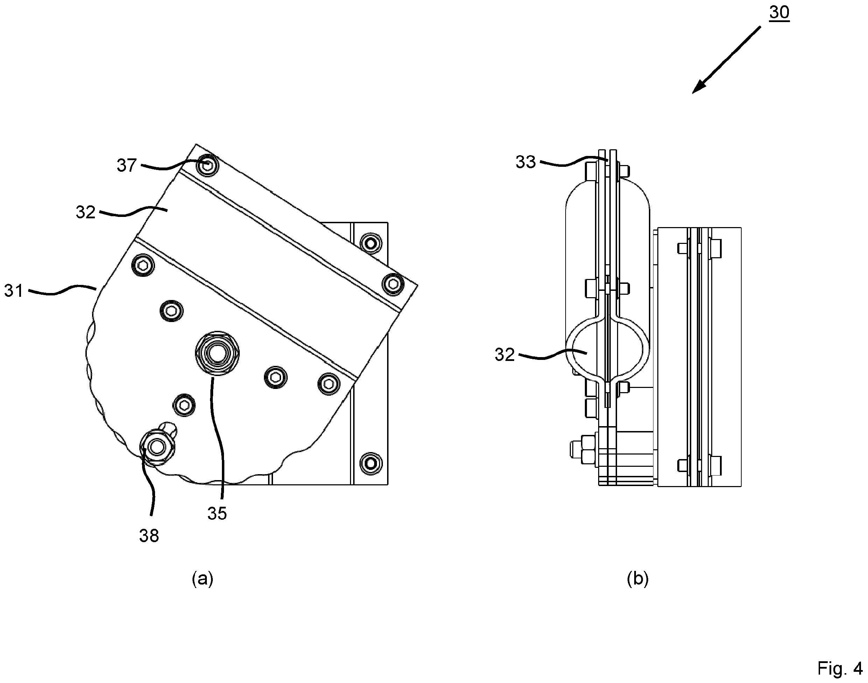

Fig. 3a und Fig. 3b zeigen schematische Darstellungen eines Gelenks 30 in einer ersten Ansicht respektive einer zweiten Ansicht. Des Weiteren zeigen Fig. 4a und Fig. 4b schematische Darstellung des Gelenks 30 in einer dritten Ansicht respektive einer vierten Ansicht.

Das Gelenk 30 weist zwei miteinander verbundene und zueinander verdrehbare Gelenkelemente 31 auf, in welchen jeweils eine Gelenkaufnahme 32 gebildet ist, die eingerichtet ist, ein Trägerelement 20 aufzunehmen, sodass dieses bei Montage in Längsrichtung verschiebbar ist. Hierzu ist die Gelenkaufnahme 32 eingerichtet, das Trägerelement 20 in Längsrichtung formschlüssig aufzunehmen. Die Gelenkaufnahme 32 weist eine erste und eine zweite Nut 33 auf, welche eingerichtet sind, jeweils einen der Flügelabschnitte 22 in Längsrichtung formschlüssig aufzunehmen. Die Gelenkaufnahme 32 kann ein Zylinderelement 34 aufweisen, welches eingerichtet ist, den Rohrabschnitt 21 in Längsrichtung formschlüssig aufzunehmen. Die erste und die zweite Nut 33 können bezüglich der Gelenkaufnahme 32 gegenüberliegend angeordnet sein.

Jedes der beiden Gelenkelemente 31 des Gelenks 30 weist jeweils zwei Teilgelenkelemente 31a, 31b auf, mittels deren Zusammenfügen die Gelenkaufnahme 32 einschließlich der ersten und zweiten Nut 33 gebildet sind. Die Teilgelenkelemente 31a, 31b sind miteinander nicht lösbar verbunden. Die Gelenkelemente 31 sind auf einer gemeinsamen Achse 35 angeordnet und können mittels der Achse 35 zueinander verdreht werden.

Jedes der beiden Gelenkelemente 31 weist mehrere Arretierungsöffnungen 36 auf, die so angeordnet sind, dass sie die erste oder die zweite Nut 33 schneiden. Die Arretierungsöffnungen 36 sind derart positioniert, dass sie bei Aufnahme des Trägerelements 20 in einem der Gelenkelemente 31 und entsprechende Verschiebung des Trägerelements 20 mit den Öffnungen 23 des Flügelabschnitts 22 des Trägerelements 20 fluchten. Die Positionierung der Arretierungsöffnungen 36 ist entsprechend an den Abständen der Öffnungen 23 des Flügelabschnitts 22 zueinander angepasst. Anschließend kann das Trägerelement 20 mit einem der Gelenkelemente 31 mittels eines Arretierungsmittels 37, etwa einer Schraube und Mutter, durch die Öffnungen 23 und die Arretierungsöffnungen 36 lösbar verbunden werden. Ergänzend oder alternativ kann das Trägerelement 20 auch mittels Pressung der Teilgelenkelemente 31a, 31b durch das Arretierungsmittel 37 arretiert sein.

Das Gelenk 30 weist außerdem ein Dreharretierungsmittel 38 auf, welches eingerichtet ist, eine relative Drehung der Gelenkelemente 31 zu lösbar zu arretieren. Hierzu weist eines der Gelenkelemente 31 mehrere Dreharretierungsöffnungen 39 und das andere der Gelenkelemente wenigstens eine Dreharretierungsöffnung 39 auf, die jeweils eingerichtet sind, bei Drehung der Gelenkelemente 31 miteinander zu bestimmten Drehwinkeln zu fluchten. Das Dreharretierungsmittel 38 kann beispielsweise eine Schraube und eine Mutter aufweisen.

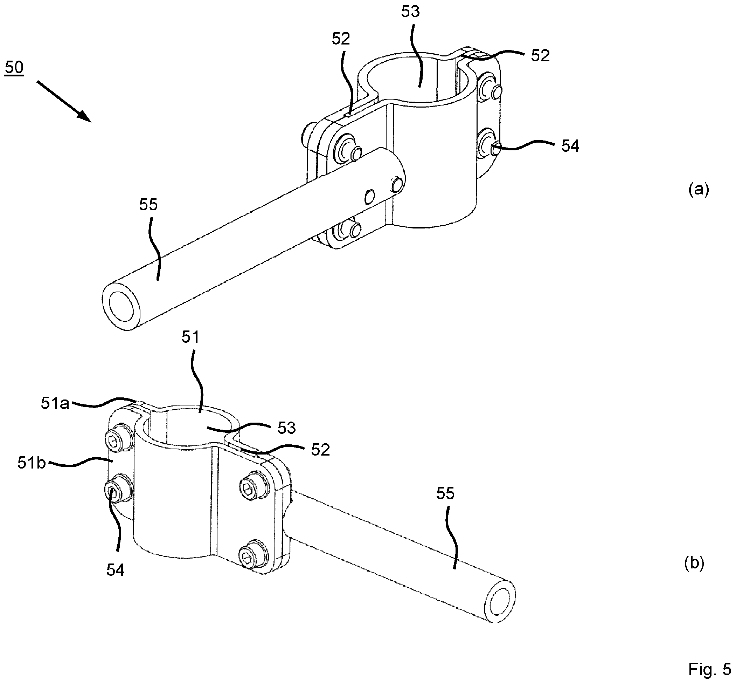

Fig. 5a zeigt eine schematische Darstellung eines Halterungselements 50 in einer ersten Ansicht und Fig. 5b zeigt eine schematische Darstellung des Halterungselements 50 in einer zweiten Ansicht. Das Halterungselement 50 weist einen eine Halterungsaufnahme 51 auf, der eingerichtet ist, ein Trägerelement 20 in aufzunehmen, sodass dieses bei Montage (vor Arretieren) in Längsrichtung verschiebbar ist.

Die Halterungsaufnahme 51 des Halterungselements 50 weist eine dritte und eine vierte Nut 52 auf, um jeweils einen der Flügelabschnitte 22 in Längsrichtung formschlüssig aufzunehmen. Die Halterungsaufnahme 51 weist ein zweites Zylinderelement 53 auf, um den Rohrabschnitt 20 in Längsrichtung formschlüssig aufzunehmen. Die dritte und die vierte Nut 52 sind bezüglich der Halterungsaufnahme 51 gegenüberliegend angeordnet.

Das Halterungselement 51 kann zwei Teilhalterungselemente 51a, 51b aufweisen, mittels deren Zusammenfügen die Halterungsaufnahme 51 und insbesondere die dritte und vierte Nut 52 gebildet werden. Die Teilhalterungselemente 51a, 51b sind hierbei (lösbar oder nicht lösbar) miteinander verbunden.

Das Halterungselement 51 weist außerdem ein zweites Arretierungsmittel 54 auf, um eine Längsbewegung des im Halterungselement aufgenommenen Trägerelements lösbar zu arretieren. Das Halterungselement kann mindestens eine Halterungsarretierungsöffnung aufweisen, welche bevorzugt die dritte Nut oder die vierte Nut 52 schneidet. Die mindestens eine Halterungsarretierungsöffnung kann derart angeordnet sein, dass sie bei Aufnahme des Trägerelements 20 mit einer der Öffnungen 23 des Flügelabschnitts 22 fluchtet.

Das zweite Arretierungsmittel 54 kann mindestens ein zweites Arretierungsbefestigungsmittel aufweisen, welches eingerichtet ist, mittels der Halterungsarretierungsöffnung und der Öffnung 23 des Flügelabschnitts 22 das Trägerelement 20 lösbar zu arretieren. Das zweite Arretierungsbefestigungsmittel kann eine Schraubverbindung oder eine Rastverbindung aufweisen. Ergänzend oder alternativ kann das Trägerelement 20 auch mittels Pressung der Teilhalterungselemente 51a, 51b durch das zweite Arretierungsmittel 54 arretiert sein.

Das Halterungselement 50 weist außerdem ein Anschlusselement 55 auf, mittels welchem beispielsweise ein Stützelement 70 und / oder ein Funktionsmodul wie ein Filmproduktionsmodul angebracht werden kann. Das Anschlusselement 55 ist rohrförmig gebildet und im Wesentlichen senkrecht zur Längsrichtung der Halterungsaufnahme 52 angeordnet.

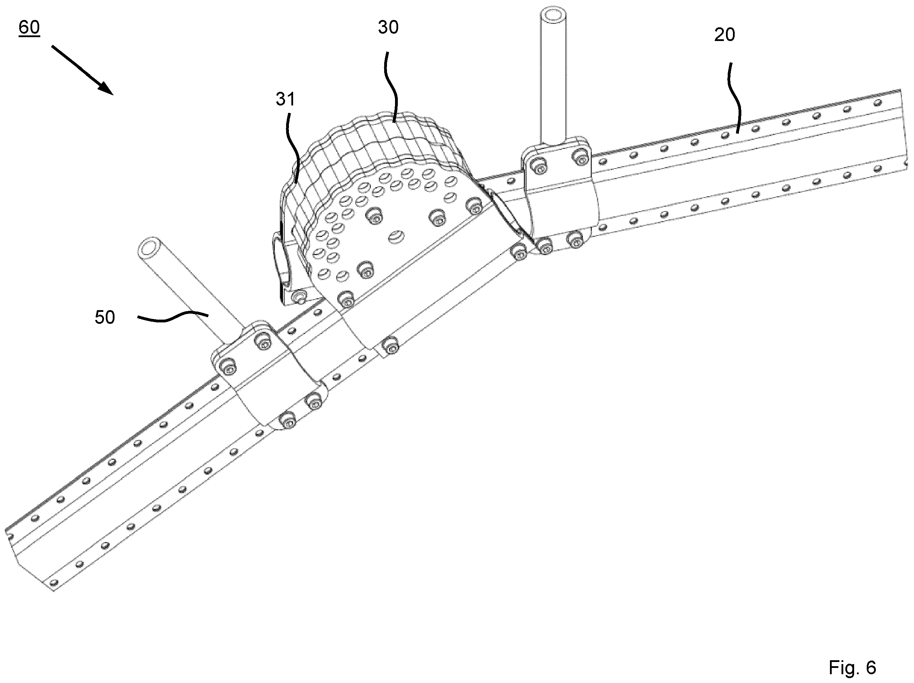

Fig. 6 zeigt eine schematische Darstellung einer ersten Teilanordnung mit einem Gelenk 30 und zwei Trägerelementen 20. In jeweils einem der beiden Gelenkelemente 31 ist eines der beiden Trägerelemente 20 befestigt. Des Weiteren ist auf jedem der Trägerelemente 30 ein Halterungselement 50 angeordnet.

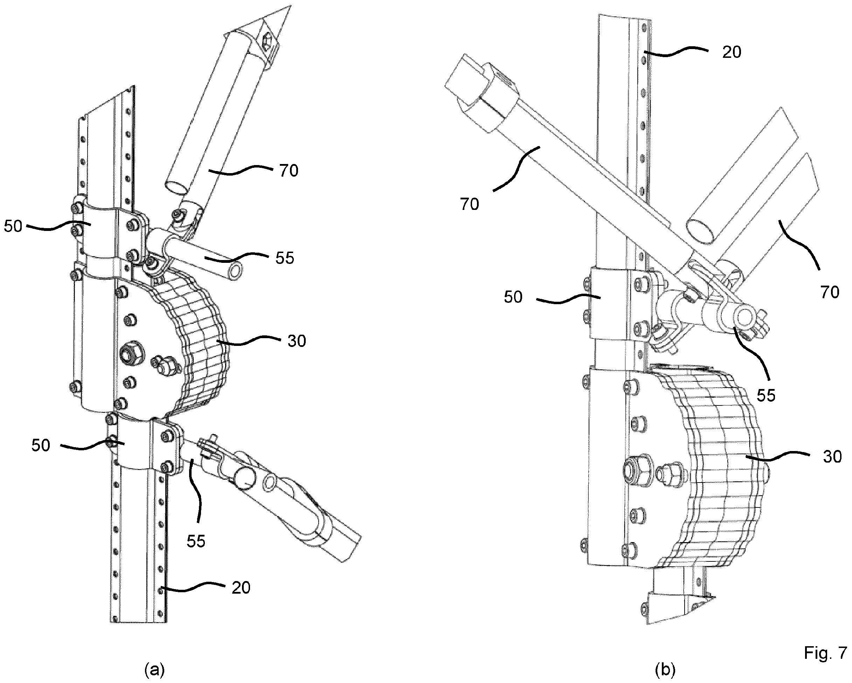

Fig. 7a zeigt eine schematische Darstellung einer zweiten Teilanordnung mit einem Gelenk 30, zwei Trägerelementen 20 und zwei Halterungselementen 50 und Fig. 7b zeigt eine schematische Darstellung einer dritten Teilanordnung mit einem Gelenk 30, zwei Trägerelementen 20 und einem Halterungselement 50. An den Anschlusselementen 55 jedes der Halterungselemente 50 sind jeweils ein oder mehrere Stützelemente 70 befestigt.

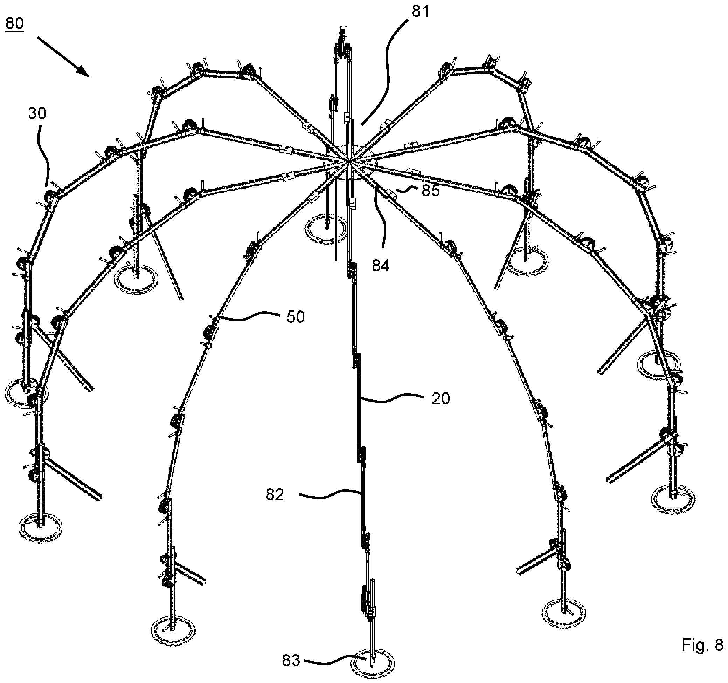

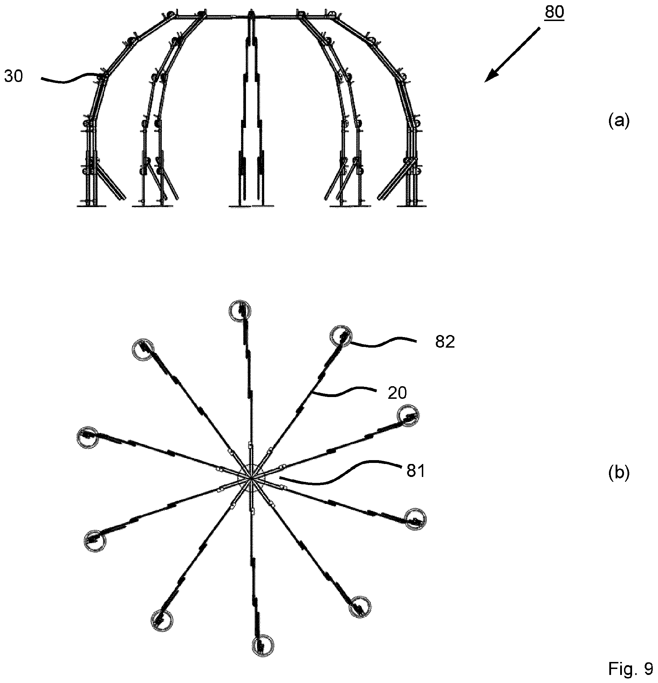

Fig. 8 zeigt eine schematische Darstellung einer Tragkonstruktion 80 in einer ersten Ansicht, Fig. 9a zeigt eine schematische Darstellung der Tragkonstruktion 80 in einer zweiten Ansicht und Fig. 9b zeigt eine schematische Darstellung der Tragkonstruktion 80 in einer dritten Ansicht.

Die Tragkonstruktion 80 weist eine Mehrzahl von Trägerelementen 20 auf, welche mittels einer Mehrzahl von Gelenken 30 miteinander verbunden sind. Außerdem sind auf den Trägerelementen 20 in der Nähe jedes der Gelenke 30 jeweils zwei Halterungselemente 50 befestigt.

Die Tragkonstruktion 80 weist außerdem ein Kopfelement 81 auf, mit welchem mehrere Trägerelemente 20 zentral verbunden werden können. Die Tragkonstruktion 80 weist mehrere Arme 82 auf, welche jeweils eine Gruppe von Trägerelementen 20 (Trägerelementgruppen) und Gelenken 30 (Gelenkgruppen) umfassen. Die Trägerelemente 20 jedes Arms 82 sind jeweils in einer Reihe (seriell) miteinander verbunden.

Jeder der Arme 82 ist jeweils an einem ersten Arm-Ende am Kopfelement 81 befestigt und an einem zweiten Arm-Ende über ein Fußelement 83 auf einem Untergrund angeordnet. Die Arme 82 sind derart gebildet und am angeordnet, dass die Tragkonstruktion 80 eine Haubenform aufweist. Hierzu ist jeder der Arme 82 im Wesentlichen als Viertelkreis gebildet.

Das Kopfelement 81 weist mehrere Kopfverbindungselemente 84 auf, welche sich vorliegend strahlenförmig vom Kopfelementzentrum erstrecken. Die Kopfverbindungselemente 84 sind jeweils gleichwinklig zueinander beabstandet und in einer Ebene angeordnet. Das Kopfelement 84 weist außerdem mehrere Kopfbefestigungsmittel 85 zur Verbindung mit einem der Trägerelemente 82 auf.

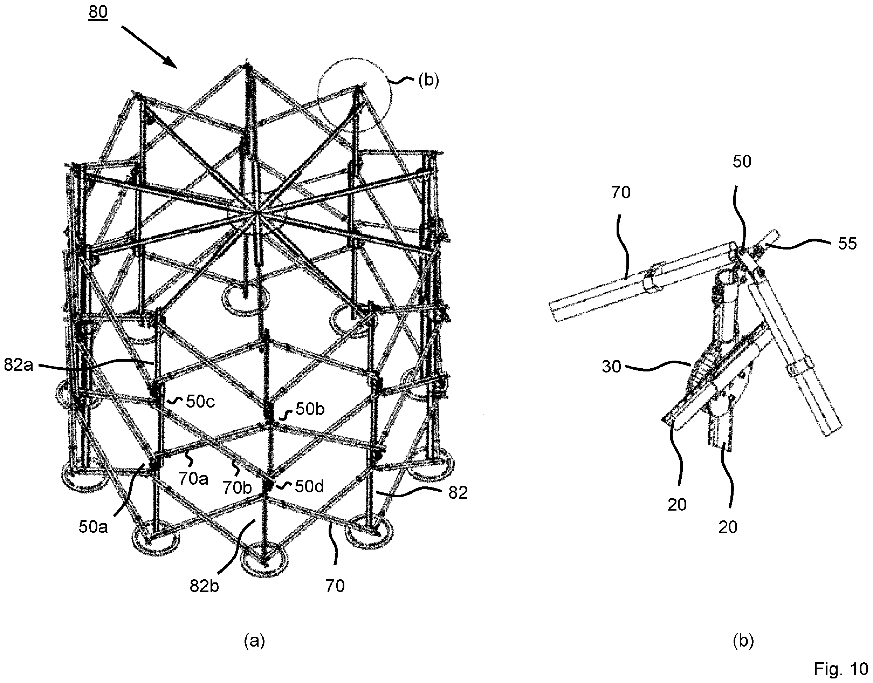

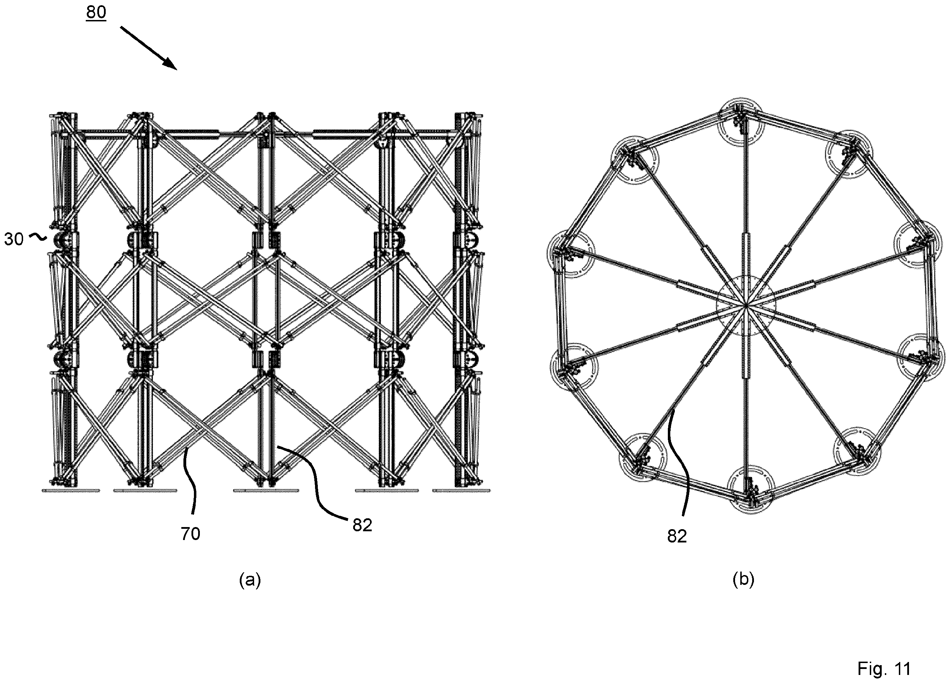

Fig. 10a zeigt eine schematische Darstellung einer weiteren Ausgestaltung der Tragkonstruktion 80 in einer ersten Ansicht, Fig. 10b zeigt eine Detailansicht der Tragkonstruktion 80, Fig. 11a zeigt eine schematische Darstellung der Tragkonstruktion 80 in einer zweiten Ansicht und Fig. 11b zeigt eine schematische Darstellung der Tragkonstruktion 80 in einer dritten Ansicht.

Bei der dargestellten Ausgestaltung sind benachbarte Arme 82 zusätzlich über Stützelemente 70 miteinander verbunden, welche wiederum mittels Halterungselementen 50 an den Armen 82 befestigt sind. Beispielsweise sind ein erstes Halterungselement 50a eines ersten Arms 82a und ein zweites Halterungselement 50b eines benachbarten zweiten Arms 82b über ein erstes Stützelement 70a verbunden. Das erste Stützelement 70a ist insbesondere verschiebungsfest an dem ersten Halterungselement 50a und dem zweiten Halterungselement 50b befestigt.

Des Weiteren ist ein drittes Halterungselement 50c auf dem ersten Arm 82a, welches zum ersten Halterungselement 50a des ersten Arms 82a benachbart ist, mit einem vierten Halterungselement 50d auf dem zweiten Arm 82b, welches zum zweiten Halterungselement 50b des zweiten Arms 82b benachbart ist, über ein zweites Stützelement 70b verbunden. Das erste Stützelement 70a und das zweite Stützelement 70b sind hierbei sich überkreuzend angeordnet.

Die Arme 82 sind derart gebildet und am angeordnet, dass die Tragkonstruktion 80 eine polygonale Prismenform aufweist, welche im Wesentlichen einem Zylinder entspricht. Hierzu ist jeder der Arme 82 im Wesentlichen in L-Form gebildet.

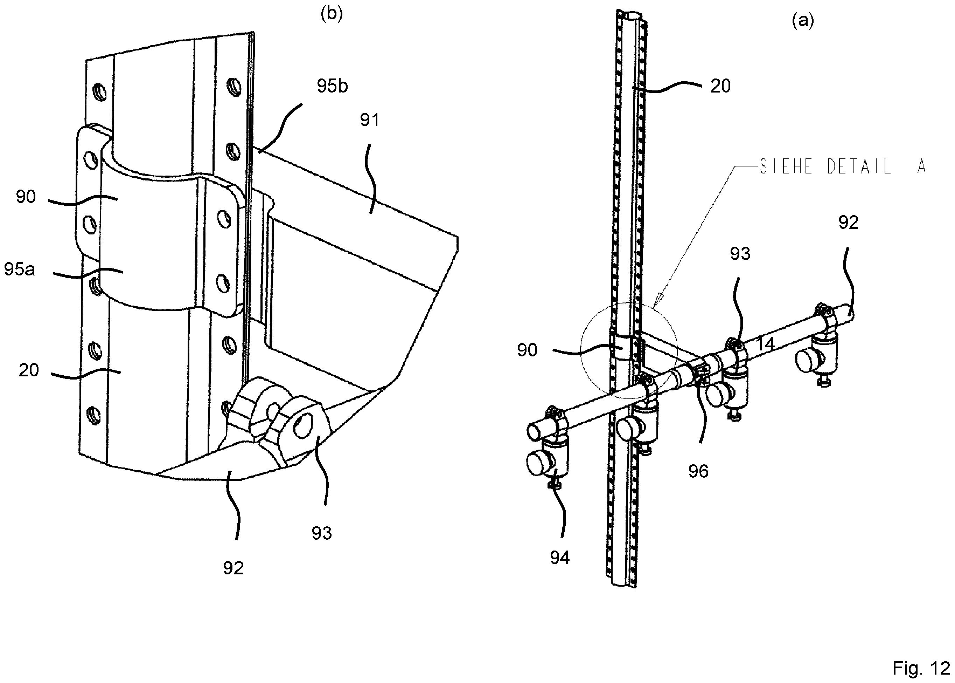

Fig. 12 bis 14 zeigen schematische Darstellungen einer Anordnung, bei der an dem Trägerelement 20 mittels eines weiteren Halterungselements 90 über ein hieran einstückig angeformtes Verbindungstück 91 eine Tragstange 92 gehalten wird. An der Tragstange 92 sind mittels eines jeweiligen Halters 93 Funktionsmodule 94 lösbar angeordnet sind, zum Beispiel Kameras für Bildaufnahmen.

Gemäß Fig. 12b ist das weitere Halterungselements 90 mit einer Schelle 95a und einer Gegenschelle 95b gebildet, an der das einstückig angeformte Verbindungstück 91 gebildet. Zusammen umgreifen Schelle 95a und Gegenschelle 95b das Trägerelement 20 im Wesentlichen vollständig umgreift.

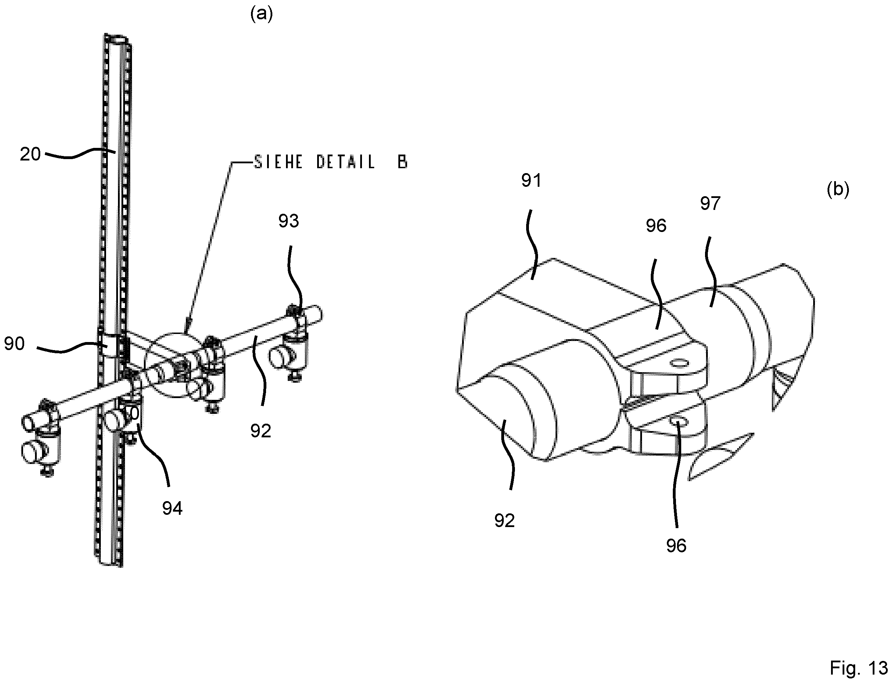

Fig. 13b zeigt ein Detail B betreffend eine klemmbare Aufnahme 96 zum lösbaren Aufnehmen der Tragstange 92 an dem einstückig angeformten Verbindungstück 91. Die klemmbare Aufnahme 96 ist im gezeigten Beispiel ihrerseits an das Verbindungsstück 91 einstückig angeformt. Im Bereich eines Abschnitts der Tragstange 92, welcher in der klemmbare Aufnahme 95 angeordnet ist, weist die Tragstange 92 eine Aufdickung 97 auf.

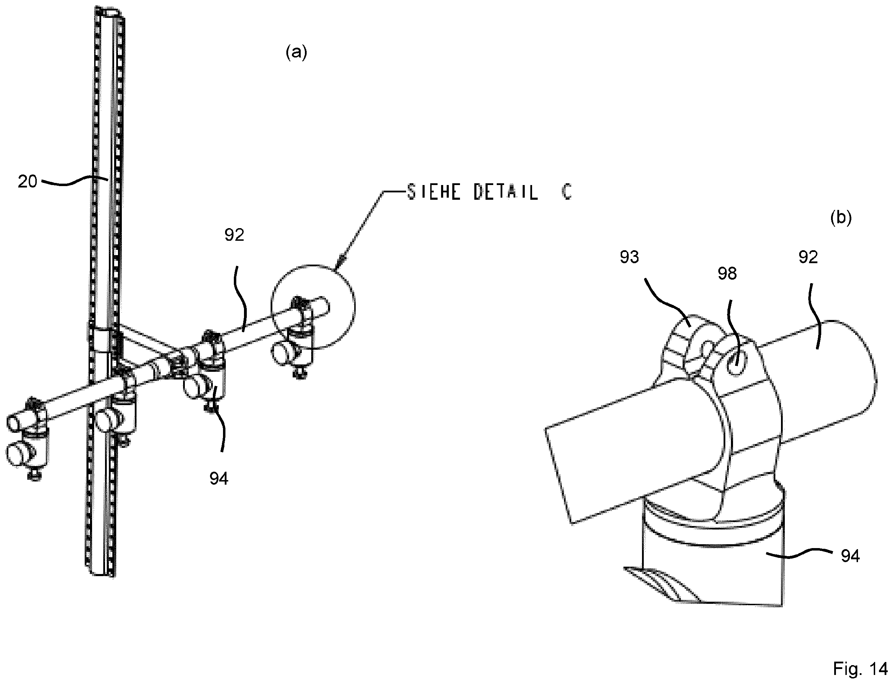

Fig. 14b zeigt ein Detail C betreffend die Halter 93 zum lösbaren (klemmenden) Anbringen des jeweiligen Funktionsmoduls 94 an der Tragstange 92. Der Halter 93 ist als auf die Tragstange 92 lösbar aufsteckbare Klemmschelle ausgeführt. Zum Klemmen kann in Öffnungen 98 eine Schraubverbindung (nicht dargestellt) eingeführt werden. Vergleichbar kann dies bei der klemmbare Aufnahme 96 gemäß Fig. 13b vorgesehen sein.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung zum tragenden Aufnehmen eines Funktionsmoduls, aufweisend:
- eine modulare Tragkonstruktion (80), die mit Trägerelementen (20) gebildet ist, welche mit einem hohlen Querschnitt und einander gegenüberliegenden Profilelementen (10) ausgeführt sind, wobei die Profilelemente (10) jeweils einen mittleren Halbrohrabschnitt (11) sowie hieran beidseitig einstückig angeformte Teilflügelabschnitte (12) mit Profilelement-Öffnungen (13) aufweisen und die Teilflügelabschnitte (12) der Profilelemente (10) flächig aufeinanderliegend angeordnet sind, derart, dass die Profilelement-Öffnungen (13) paarweise einander zugeordnet sind, die Halbrohrabschnitte (11) jedes der Trägerelemente (20) einen Rohrabschnitt (21) und die Teilflügelabschnitte (12) jedes der Trägerelemente jeweils einen Flügelabschnitt (22) bilden, **dadurch gekennzeichnet, dass** die Teilflügelabschnitte (12) jeweils zueinander fluchtend angeordnet und miteinander verklebt sind und
- ein Funktionsmodul, welches an der Tragkonstruktion (80) montiert ist.

2. Anordnung nach Anspruch 1, wobei sich die Flügelabschnitte (22) jeweils in Längsrichtung des Rohrabschnitts (21) erstrecken und im Wesentlichen eben gebildet sind.

3. Anordnung nach Anspruch 1 oder 2, wobei der Rohrabschnitt (21) einen im Wesentlichen runden oder ovalen Querschnitt aufweist und sich die Flügelabschnitte (22) radial vom Rohrabschnitt (21) erstrecken.

4. Anordnung nach mindestens einem der vorangehenden Ansprüche, wobei die Halbrohrabschnitte (11) jedes der Profilelemente (10) jeweils in einer gemeinsamen Ebene angeordnet sind.

5. Anordnung nach mindestens einem der vorangehenden Ansprüche, wobei der Rohrabschnitt (21) eine konstante Rohrabschnittdicke und die Flügelabschnitte (22) jeweils eine konstante Flügelabschnittdicke aufweisen.

6. Anordnung nach mindestens einem der vorangehenden Ansprüche, wobei die Flügelabschnitte (22) jeweils eine Flügelabschnittbreite zwischen 25 % und 100 % einer Rohrabschnittbreite aufweisen.

7. Anordnung nach mindestens einem der vorangehenden Ansprüche, wobei das Funktionsmodul ein Funktionsmodul aus der folgenden Gruppe ist: Filmproduktionsmodul, Bildaufnahmemodul, Tonaufnahmemodul, Beleuchtungsmodul und Messmodul.

8. Anordnung nach mindestens einem der vorangehenden Ansprüche, des Weiteren Karbonfasern aufweisend.

9. Anordnung nach mindestens einem der vorangehenden Ansprüche, wobei die Tragkonstruktion (80) ein Gelenk (30) mit miteinander verbundenen und zueinander verdrehbaren Gelenkelementen (31) aufweist, welche jeweils mit einer Gelenkaufnahme (32) gebildet sind, die eingerichtet ist, hierin ein erstes der Trägerelemente (20) haltend aufzunehmen.

10. Anordnung nach Anspruch 9, wobei das Gelenk (30) ein Arretierungsmittel (37) aufweist, welches eingerichtet ist, eine Längsbewegung des ersten der Trägerelemente (20) lösbar zu arretieren.

11. Anordnung nach mindestens einem der vorangehenden Ansprüche, wobei die Tragkonstruktion ein Halterungselement (50) mit einer Halterungsaufnahme (51), in der das erste oder ein zweites der Trägerelemente (20) angeordnet ist, und ein Anschlusselement (55) aufweist, mit der ein Stützelement (70) und / oder das Funktionsmodul an der Tragkonstruktion (80) aufgenommen ist.

12. Anordnung nach mindestens einem der vorangehenden Ansprüche, des Weiteren aufweisend ein Kopfelement (81), welches eingerichtet ist, mit mehreren der Trägerelemente (20) lösbar verbindbar zu sein, wobei
- eine erste Trägerelementgruppe und eine zweite Trägerelementgruppe der Mehrzahl von Trägerelementen (20) jeweils seriell mittels einer ersten Gelenkgruppe respektive einer zweiten Gelenkgruppe der Mehrzahl von Gelenken (30) miteinander lösbar zu einem ersten Arm (82, 82a) respektive einem zweiten Arm (82, 82b) verbunden sind und
- der erste Arm (82, 82a) und der zweite Arm (82, 82b) jeweils an einem ersten Arm-Ende lösbar am Kopfelement (81) befestigt und an einem zweiten Arm-Ende auf einem Untergrund angeordnet sind.

13. Anordnung nach Anspruch 12, des Weiteren eine Mehrzahl von Halterungselementen (50, 50a, 50b) und ein erstes Stützelement (70, 70a) aufweisend, wobei
- ein erstes Halterungselement (50, 50a) der Mehrzahl von Halterungselementen (50, 50a, 50b) auf einem der Trägerelemente (20) des ersten Arms (82, 82a) und ein zweites Halterungselement (50, 50b) auf einem der Trägerelementen (20) des zweiten Arms (82, 82b) befestigt ist und
- das erste Halterungselement (50, 50a) über das erste Stützelement (70, 70a) mit dem zweiten Halterungselement (50, 50b) lösbar verbunden ist.

14. Modulbausystem für eine Anordnung für zum tragenden Aufnehmen eines Funktionsmoduls nach mindestens einem der vorangehenden Ansprüche, aufweisend Trägerelemente (20) für eine modulare Tragkonstruktion (80), wobei die Trägerelemente (20) mit einem hohlen Querschnitt und einander gegenüberliegenden Profilelementen (10) ausgeführt sind, wobei die Profilelemente (10) jeweils einen mittleren Halbrohrabschnitt (11)sowie hieran beidseitig einstückig angeformte Teilflügelabschnitte (12) mit Profilelement-Öffnungen (13) aufweisen und die Teilflügelabschnitte (12) der Profilelemente (10) flächig aufeinanderliegend angeordnet sind, derart, dass die Profilelement-Öffnungen (13) paarweise einander zugeordnet sind, die Halbrohrabschnitte (11) jedes der Trägerelemente (20) einen Rohrabschnitt (21) und die Teilflügelabschnitte (12) jedes der Trägerelemente jeweils einen Flügelabschnitt (22) bilden.

## Claims

1. An assembly for supporting a functional module, comprising:
- a modular support construction (80), which is formed by carrier elements (20) which are designed with a hollow cross-section and mutually opposite profile elements (10), wherein the profile elements (10) each comprise a central half-pipe section (11) and partial wing sections (12) with profile element openings (13) integrally moulded thereon on both sides and the partial wing sections (12) of the profile elements (10) are arranged lying flat on one another, in such a way that the profile element openings (13) are assigned to one another in pairs, the half-pipe sections (11) of each of the carrier elements (20) form a pipe section (21) and the partial wing sections (12) of each of the carrier elements each form a wing section (22), **characterised in that** the partial wing sections (12) are each arranged aligned with one another and glued to one another and
- a functional module which is mounted on the support construction (80).

2. The assembly according to claim 1, wherein the wing sections (22) each extend in the longitudinal direction of the pipe section (21) and are formed essentially flat.

3. The assembly according to claim 1 or 2, wherein the pipe section (21) has an essentially round or oval cross-section and the wing sections (22) extend radially from the pipe section (21).

4. The assembly according to at least one of the preceding claims, wherein the half-pipe sections (11) of each of the profile elements (10) are each arranged in a common plane.

5. The assembly according to at least one of the preceding claims, wherein the pipe section (21) has a constant pipe section thickness and the wing sections (22) each have a constant wing section thickness.

6. The assembly according to at least one of the preceding claims, wherein the wing sections (22) each have a wing section width between 25% and 100% of a pipe section width.

7. The assembly according to at least one of the preceding claims, wherein the functional module is a functional module from the following group: film production module, image recording module, sound recording module, lighting module and measuring module.

8. The assembly according to at least one of the preceding claims, further comprising carbon fibres.

9. The assembly according to at least one of the preceding claims, wherein the support construction (80) comprises a joint (30) with joint elements (31) connected to one another and rotatable with respect to one another, which are each formed with a joint mount (32) which is configured to hold herein a first of the carrier elements (20).

10. The assembly according to claim 9, wherein the joint (30) comprises a locking means (37) which is configured to lock releasably a longitudinal movement of the first of the carrier elements (20).

11. The assembly according to at least one of the preceding claims, wherein the support construction comprises a holding element (50) with a holding mount (51), in which the first or a second of the carrier elements (20) is arranged, and a connection element (55) with which a support element (70) and/or the functional module is mounted on the support construction (80).

12. The assembly according to at least one of the preceding claims, further comprising a head element (81), which is configured to be connectable detachably to a plurality of the carrier elements (20), wherein
- a first carrier element group and a second carrier element group of the plurality of carrier elements are each connected detachably to one another in series by means of a first joint group or a second joint group of the plurality of joints (30) to form a first arm (82, 82a) or a second arm (82, 82b) and
- the first arm (82, 82a) and the second arm (82, 82b) are each fastened detachably at a first arm end to the head element (81) and arranged at a second arm end on a base.

13. The assembly according to claim 12, further comprising a plurality of holding elements (50, 50a, 50b) and a first support element (70, 70a), wherein
- a first holding element (50, 50a) of the plurality of holding elements (50, 50a, 50b) is fastened on one of the carrier elements (20) of the first arm (82, 82a) and a second holding element (50, 50b) is fastened on one of the carrier elements (20) of the second arm (82, 82b) and
- the first holding element (50, 50a) is connected detachably via the first support element (70, 70a) to the second holding element (50, 50b).

14. A modular construction system for an assembly for supporting a functional module according to at least one of the preceding claims, comprising carrier elements (20) for a modular support construction (80), wherein the carrier elements (20) are formed with a hollow cross-section and mutually opposite profile elements (10), wherein the profile elements (10) each comprise a central half-pipe section (11) and partial wing sections (12) with profile openings (13) integrally moulded thereon on both sides and the partial wing sections (12) of the profile elements (10) are arranged lying flat on one another, in such a way that the profile element openings (13) are assigned to one another in pairs, the half-pipe sections (11) of each of the carrier elements (20) form a pipe section (21) and the partial wing sections (12) of each of the carrier elements each form a wing section (22).

## Revendications

1. Agencement pour la réception porteuse d'un module fonctionnel, comportant :
- une construction porteuse modulaire (80), qui est formée d'éléments porteurs (20), lesquels sont exécutés avec une section transversale creuse et des éléments profilés opposés les uns aux autres (10), sachant que les éléments profilés (10) comportent respectivement une section semi-tubulaire centrale (11) ainsi que des sections d'aile partielle (12) conformées en une seule pièce des deux côtés de celle-ci avec des ouvertures d'élément profilé (13) et les sections d'aile partielle (12) des éléments profilés (10) sont disposées l'une sur l'autre en surface de telle manière que les ouvertures d'élément profilé (13) sont attribuées par paires les unes aux autres, les sections semi-tubulaires (11) de chacun des éléments porteurs (20) forment une section tubulaire (21) et les sections d'aile partielle (12) de chacun des éléments porteurs forment respectivement une section d'aile (22), **caractérisé en ce que** les sections d'aile partielle (12) sont disposées alignées les unes par rapport aux autres et collées les unes aux autres, et
- un module fonctionnel, lequel est monté sur la construction porteuse (80).

2. Agencement selon la revendication 1, sachant que les sections d'aile (22) s'étendent respectivement dans la direction longitudinale de la section tubulaire (21) et sont pour l'essentiel formées planes.

3. Agencement selon la revendication 1 ou 2, sachant que la section tubulaire (21) comporte une section transversale pour l'essentiel ronde ou ovale et les sections d'aile (22) s'étendent radialement depuis la section tubulaire (21).

4. Agencement selon au moins l'une quelconque des revendications précédentes, sachant que les sections semi-tubulaires (11) de chacun des éléments profilés (10) sont disposés respectivement dans un plan commun.

5. Agencement selon au moins l'une quelconque des revendications précédentes, sachant que la section tubulaire (21) comporte une épaisseur de section tubulaire constante et les sections d'aile (22) comportent respectivement une épaisseur d'aile constante.

6. Agencement selon au moins l'une quelconque des revendications précédentes, sachant que les sections d'aile (22) comportent respectivement une largeur de section d'aile se situant entre 25 % et 100 % d'une largeur de section tubulaire.

7. Agencement selon au moins l'une quelconque des revendications précédentes, sachant que le module fonctionnel est un module fonctionnel appartenant au groupe suivant : module de production de film, module d'enregistrement d'images, module d'enregistrement de son, module d'éclairage et module de mesure.

8. Agencement selon au moins l'une quelconque des revendications précédentes, comportant en outre des fibres de carbone.

9. Agencement selon au moins l'une quelconque des revendications précédentes, sachant que la construction porteuse (80) comporte une articulation (30) avec des éléments d'articulation (31) reliés entre eux et pouvant tourner les uns par rapport aux autres, lesquels sont respectivement formés avec un logement d'articulation (32) qui est configuré pour loger dedans en maintien un premier des éléments porteurs (20).

10. Agencement selon la revendication 9, sachant que l'articulation (30) comporte un moyen de blocage (37), lequel est configuré pour bloquer de façon amovible un mouvement longitudinal du premier des éléments porteurs (20).

11. Agencement selon au moins l'une quelconque des revendications précédentes, sachant que la construction porteuse comporte un élément de maintien (50) avec un logement de maintien (51) dans lequel est disposé la premier ou un deuxième des éléments porteurs (20), et un élément de raccordement (55) avec lequel un élément de support (70) et/ou le module fonctionnel est logé sur la construction porteuse (80).

12. Agencement selon au moins l'une quelconque des revendications précédentes, comportant en outre un élément de tête (81), lequel est configuré pour être relié de façon amovible à plusieurs des éléments porteurs (20), sachant qu'
- un premier groupe d'éléments porteurs et un deuxième groupe d'éléments porteurs de la pluralité des éléments porteurs (20) sont reliés respectivement entre eux de façon amovible en série au moyen d'un premier groupe d'articulations ou respectivement d'un deuxième groupe d'articulations de la pluralité des articulations (30) à un premier bras (82, 82a) respectivement à un deuxième bras (82, 82b), et
- le premier bras (82, 82a) et le deuxième bras (872, 82b) sont fixés respectivement de façon amovible à une première extrémité de bras sur l'élément de tête (81) et sont disposés sur une deuxième extrémité de bras sur un sol.

13. Agencement selon la revendication 12, comportant en outre une pluralité d'éléments de maintien (50, 50a, 50b) et un premier élément de support (70, 70a), sachant qu'
- un premier élément de maintien (50, 50a) de la pluralité des éléments de maintien (50, 50a, 50b) est fixé sur un des éléments porteurs (20) du premier bras (82, 82a) et un deuxième élément de maintien (50, 50b) sur un des éléments porteurs (20) du deuxième bras (82, 82b), et
- le premier élément de maintien (50, 50a) est relié de façon amovible par le biais du premier élément de support (70, 70a) au deuxième élément de maintien (50, 50b).

14. Système de construction modulaire pour un agencement pour la réception porteuse d'un module fonctionnel selon au moins l'une quelconque des revendications précédentes, comportant des éléments porteurs (20) pour une construction porteuse modulaire (80), sachant que les éléments porteurs (20) sont exécutés avec une section transversale creuse et des éléments profilés opposés les uns aux autres (10), sachant que les éléments profilés (10) comportent respectivement une section semi-tubulaire centrale (11) ainsi que des sections d'aile partielle (12) avec des ouvertures d'élément profilé (13), conformées en une seule pièce des deux côtés de celle-ci et les sections d'aile partielle (12) des éléments profilés (10) sont disposées l'une sur l'autre en surface de telle manière que les ouvertures d'élément profilé (13) sont attribuées par paires les unes aux autres, les sections semi-tubulaires (11) de chacun des éléments porteurs (20) forment une section tubulaire (21) et les sections d'aile partielle (12) de chacun des éléments porteurs respectivement une section d'aile (22).
